(19) Europäisches Patentamt
European Patent Office
Office européen des brevets

(11) EP 2 384 863 A2

(12) **EUROPEAN PATENT APPLICATION**

(43) Date of publication:
**09.11.2011 Bulletin 2011/45**

(51) Int Cl.:
***B25J 9/16*** *(2006.01)*

(21) Application number: **10464006.5**

(22) Date of filing: **19.07.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(30) Priority: **03.05.2010 RO 201000052**

(71) Applicant: **Institutul de Mecanica Solidelor al Academiei Romane**
**Bucuresti, Cod 010141 (RO)**

(72) Inventors:
- **Vladareanu, Luige**
  **Bucuresti (RO)**
- **Velea, Lucian Marius**
  **Bucuresti (RO)**
- **Munteanu, Radu Adrian**
  **Cluj-Napoca (RO)**
- **Sireteanu, Tudor**
  **Bucuresti (RO)**
- **Munteanu, Mihai Stelian**
  **Cluj-Napoca (RO)**
- **Tont, Gabriela**
  **Oradea (RO)**
- **Vladareanu, Victor**
  **Bucuresti (RO)**
- **Balas, Cornel**
  **Bucuresti (RO)**
- **Tont, Dan George**
  **Oradea (RO)**
- **Melinte, Daniel Octavian**
  **Bucuresti (RO)**
- **Gal, Ionel Alexandru**
  **Bucuresti (RO)**

(54) **Method and device for dynamic control of a walking robot**

(57) The invention relates to a method and dynamic control device of walking robots, for hybrid real time control, trajectory position control of tip movement and robot leg joints, reaction forces and gait dynamic of walking robots in order to increase their movement stability on flat terrains, uneven or with obstacles, at constant or variable walking speed, with applications in transport of nuclear materials, in agricultural activities of sowing, weeding, military applications, in detecting mines and generally rough terrain applications, difficult to access. The method has 14 control sequences allowing the determination of force-position hybrid control strategies and dynamic control strategies of walking robots, together with the presentation of control system architecture. The device is made of a multitude of modules which aim to generate, in real time, an error signal on robot axis, on each degree of freedom of RP walking robots, for actuators control, which take into account the control strategies of the position component, the force component and dynamic control components, in order to increase stability and mobility of walking robots. The main advantages of the invention consists in real-time robot balance control, gait control and predictable motion control providing increased mobility and stability in order to achieve higher performance, in relation to the walking robots movement possibilities, an also the development of new technological capabilities of the control systems.

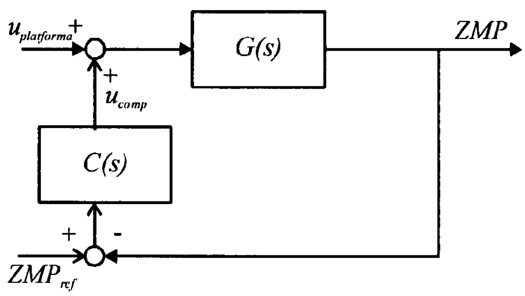


Figure 11

EP 2 384 863 A2

## Description

The invention refers to a method and device for dynamic control of walking robots, for hybrid control, in real time, of motion trajectory position of the robot leg end-effector and joints, reaction forces and walking dynamics for the walking robots in order to increase movement stability of walking robots on flat terrain, with obstacles or uneven gound, at constant or variable walking speed and variable load, with applications in nuclear transport, agricultural activities, planting, weeding, military applications in mine detection, lunar experiments and in general, applications on irregular, difficult to access terrain.

For dynamic control of walking robots are known several methods and devices. Some of them treat only the hybrid position-force control of robots, while others control the walking dynamics of humanoid robots. On the hybrid force-position a control method is known called "adjustment position" proposed by Whitney. It is a simple method in which the contact force is used to modify the reference position trajectory of robot end-effector. Hybrid force-position control, developed by Raibert, Craig and Manson provides force and position control when the robot interacts with the environment, through the decomposition in "position sub-space" and "force sub-space". Motion control of resistance to arch, which is essentially the default force control based on position was applied by Lawrence and Stoughton (1987) and Kazerooni, Waibel, and Kim (1990). Salisbury (1980) presented an active control method for the apparent stiffness of the robot's end-effector in Cartesian space. Nonlinear adaptive controllers of force and resistance to arch have been therefore developed, possessing superior stability and improved performance compared with conventional linear controllers with fixed amplification. Adaptive controllers make use of the adaptive control approach having the Lyapunov (MRAC) reference model, while linear controllers use Popov stability criterion to ensure stability in closed circuit. Impedance control introduced by Hogan and Karen, in which a desired dynamic relationship between robot's end-effector position and contact force was continued by Pelletier and Daneshmend respectively Lacky and Hsia. Pelletier and Daneshmend presents a diagram of an adaptive controller to compensate for environmental changes in stiffness during movement using the attenuation device control. Lasky and Hsia describe a system consisting of an impedance conventional control device in inner loop and a trajectory change control device in the outer loop for force tracking. Chan develops a diagram of a variable structure controller for the control device of resistant impedance in the presence of parameters of uncertainty and external disturbances; but this strategy requires precise knowledge of the location and environmental stiffness to define the control force. Various methods / control strategies are known for dynamic walking of humanoid robots based on the generation of walking models taking into account the stable point trajectory of zero moment point (PMZ) and ensure robot's stability (balance) through real-time control loops. Since actual PMZ trajectory is different from the desired PMZ trajectory due to disturbances such as surface irregularities, sensory errors and imperfect dynamic model of the humanoid robot, more control systems based on sensory feedback are required. Yamaguchi studied online walking model generation to ensure stability control for the robot using movement of the upper humanoid robot based on PMZ informations. Kajita (Proceedings of Conference on Robotics and Automation, Taipei, 2003, p. 1620-1626) introduced a method of walking pattern generation using PMZ control systems to generate new references. Kagami (Proceedings of IEEE International Conference on Intelligent Robots and Systems, Lausanne, 2002, p. 2557-2562) used a compliant control method of robot platform to track a given PMZ trajectory.

**These solutions have disadvantages** because they do not have a complete treatment for the robots walking control including both hybrid position-force control and movement dynamic control. More dynamic control methods are limited to humanoid robots.

**The problem the invention solves** is that it ensures a complex control for the dynamic walking robots, hybrid control, in real time, for the position and motion path of the robot's leg end-effector and joints, the forces of reaction and movement dynamic control of walking robots to increase stability and mobility.

**The method according to the invention eliminates the disadvantages above** in that for the hybrid control, in real time, for the motion path of the end-effector's position and leg joints of a walking robot, there are calculated:

(i) error due to position component on the robot's axis of freedom corresponding to robot leg joints, which is obtained by multiplying the position error matrix in the space of robot motion due to the difference between desired trajectory and actual trajectory, determined by measuring the position signals received from the robot leg joints applied to the resulting matrix from direct kinematics for the mechanical robot structure, with the inverse kinematics matrix values of robot's mechanical structure, matrix values also obtained in a simultaneous process with the determination of the positioning error matrix in the robot space by processing the Jacobian matrix with real values received from the robot leg joints, triangulation of the determined matrix and achievement of the inverse substitution;

(ii) error due to the force components on the robot's axis of freedom corresponding to the robot leg joints which are obtained by multiplying the position error matrix in the robot movement space due to force, obtained as the motion difference between the current position deviation measured by the command system which generates the position deviation for the axis controlled in force and the position deviation due to the desired residual force, given by the multiplication between physical stiffness of each leg segment corresponding for each joint and the desired residual force on each axis of freedom of robot, with the inverse kinematics matrix values for the robot mechanical structure, matrix values obtained in a process simultaneous with that of the determination of the positioning error matrix in robot space due to force, by processing the Jacobian matrix with real values from the robot leg joints, triangulation of the determined matrix and achievement of the inverse substitution;

**plus the errors** caused by applying the control strategy of a dynamic stable walking for walking robots, such as:

(iii) the error resulting from the damping control strategy at the robot stepping in single support phase, through robot motion modeling with a simple reversed pendulum equation with a joint in the single support phase, which opposes the damping forces of the foot joint;
(iv) the resulting error from the control strategy to compensate for the zero moment point, a single phase, the single support phase, due to platform movement back and forth according to the zero moment point dynamics, which is a mathematical modeling of motion compensator for the zero moment point, with a simple reversed pendulum equation;
(v) error resulting from the control strategy for landing guidance, obtained through the difference between the reference angle of the leg joint and the reference angle of foot joint calculated by integrating the measured torque throughout the stepping time with a time constant given by the damping coefficient at landing and stepping stiffness;
(vi) the error resulting from the platform balance amplitude control strategy to move the zero moment point, corrected by measuring the zero moment point during each cycle of movement, achieved by modeling lateral balance amplitude of the platform through an inverted pendulum and obtained through a compensating algorithm for the position of the feet which touch the ground so that the zero moment point current amplitude (measured) can converge to the average zero moment point of reference;
(vii) the error resulting from the control strategy of rotation / advance platform that allows the central position of the platform to move in the opposite direction of the inclined transverse plane so that the balancing movement can be well balanced, while obtaining the vector position of the platform through a iterative integration equation of the angular errors vector of the platform, between the phases of single support, boosted by a gain coefficient which is determined experimentally;
(viii) the resulting error in position control strategy for landing, consists in generating probable movements of the robot by processing previous movements designed to prevent abnormal movements, aimed for stepping to the direction of fall, through a twisting motion for the platform, obtained by superimposing an experimentally determined law of motion on normal movement around the axis z of the robot's foot, in which the position vector of the foot during the landing phase is determined as an iterative relationship by adding to the prescribed vector the landing position and the error vector obtained by multiplying with an amplification factor between average angular speeds and stable angular speeds for the movement of advance respectively the movement of torsion;
(ix) the error resulting from the control strategy of bending over the side of safety of the robot, which is to predict the robot movements in the basis of experimental statistical information in compliance with the edges of stability, prevention of abnormal conditions and processing of additional movements to avoid such instability which may lead to the overthrow of the robot for movement on uneven ground or external forces and enable real-time determination of overcoming the inclination margins on the inside or outside, by iterative integration of the angle of rotation in the twisting of the platform during the period of time $\tau$, from the start of each walking phase, and if the inclination margins are exceeded, the angle of rotation of the leg joint is set by a predefined algorithm based on the angle of rotation in the twisting motion of the platform;

**in which some error signals** are digitally controlled by multiplexing them after two control strategies, as follows:

(x) the detection control for a step of moving the robot, in which at detecting the earth by the robot's foot in the support phases, for a smoothly touch, the error signal is multiplexed, resulted from the damping control strategy and signal error resulted from the control strategy to compensate for zero moment point with the error signal resulted from the orientation control strategy at landing, according to stages from the programmer module of strategies;
(xi) repeatability control at landing, which avoids robot motion landing instabilities by generating a signal blocking the walking scheme if the foot is not in contact with the ground at the end of the single support phases, with intreruption of the position reference signal provided by the motion generator and stoping the movement command of the foot until, in the virtue of inertia, it makes contact with the ground;

**to which two programs are added:**

(xii) a developer of timing strategies to drive each control strategy reported to four stages of a full robot's walking step, with the functions: in stage 1, the damping check is carried out, compensation control for the zero moment point and bending over the side of safety control, in step 2 in double support phase occurs landing orientation control, periodic adjustment control for the lateral balance amplitude of the platform, control of rotation / platform advancing and platform landing control, stage 3 a stage corresponding to stage 1 and stage 4 which corresponds to phase 2 in terms of active control strategies, while maintaining continuous error signals due to position and force components;
(xiii) a program for the gait generation for walking robots, generates a force reference signal $f_{ref}$ and a position reference signal (desired) $X_D$ under the rotation / platform advance control strategy and balance amplitude control strategy for the platform and a portfolio of programs with predefined walking schemes such as a tripod walking for a hexapod walking robot, walking step by step;
(xiv) eventually, through error signal processing using fusion of the resulting signals from the strategies programmer or the fuzzy control, the error signal is achieved to control the walking robots structure actuators on each axis of motion.

**The device according to the invention removes the disadvantages mentioned** because the hybrid control, in real time, for the motion path of the end-effector and leg joints of walking robots, consists of modules which aim to generate, in real time, an error signal $\varepsilon_n$ on robot axis, for each degree of freedom of walking robots RP, for actuators control, which take into account the control strategies of position component, force component and dynamic control components to enhance stability for walking robots:
**The MPS strategies programmer module** receives one signal for each degree of robot freedom for the error signals of the position components $\Delta\Theta_P$ of the **MSIP** reverse substitution module and the error signals of the force component $\Delta\Theta_F$ of the **MSIF** force inverse substitution module, a **SCSA** tilting control signal over the safety edge from the **CMP** predictable movement control module, a **2SCBMx** multiplexed balance control signal from the **MUX** multiplexing digital control module and transmits on output an error signal of stage **SEE** and sets the time when each control strategy is used, reported in four stages of a full step for walking robots according to functions of control method taken from this invention,
**a MFSFC module for signal fusion or fuzzy control** receives an error signal from the **SEE** phase from the MUX multiplexing digital control module and transmits an error signal $\varepsilon_n$ on robot axis for every degree of freedom of walking robots with RP through processing using signal fusion method or the method of fuzzy control,
**a MSIP inverse position substitution module** receives a signal on each degree of freedom **of RP** walking robots corresponding to the **MTMP** triangular position matrix from the triangulation position matrix module, which at its turn receives signals corresponding to Jacobian position matrix from of the **MMPJ** Jacobian positioning matrix module, and together perform the inverse Jacobian matrix calculation in real time, on all degrees of freedom **of RP** walking robots,
**a MMPJ position matrix module,** which depending on the stage of complete step of **RP** walking robots, generated by the **MPS** strategies module programmer, receives the position values in the area of motion of walking robots **RP,** on each degree of freedom, from **MCCDP** direct kinematic of position calculation module and **SCPA** landing position control signal from the **CMP** predictable movement control module, calculates in real-time the Jacobian position matrix and transmit these values to the **MTMP** position matrix triangulation module,
**a MSP position summing module** receives the values of the position matrix in robot $\mathbf{X_P}$ motion space, on each degree of freedom, from the **MCCDP** direct kinematics calculation module and $\mathbf{X_D}$ reference position (desired) corresponding to the signal **1SCBMx** from the **MUX** multiplexing digital control module and calculates the position error in the motion space of **RP** walking robots being the difference between the two input signals, on each robot motion axis, which transmit to the **MMSP** position selection matrix module, which at its turn transmit these values to the **MSIP** reverse position replacement module only on the axis that will guarantee the position control, set by the **MPS** strategy programmer module,
**a MCCDP direct kinematic of position calculation module** receives the position on the robot axis $\Theta_{Pni}$ from the incremental position transducers, on each n axis in the robot's motion, calculates in real-time the position in robot $\mathbf{X_P}$ movement space, on each degree of freedom, which is transmited to the position summing module **MSP,**
**a MSIF force inverse substitution module** receives a signal for each degree of freedom of walking robots RP corresponding to the force triangular matrix from the force triangulation matrix module MTMF, which at its turn receives signals corresponding to the Jacobian force matrix from the **MMFJ** Jacobian force matrix module, and performes together the inverse Jacobian matrix calculations in real time, on all degrees of freedom **of RP** walking robot,
**a MMFJ force matrix module,** which depending on the stage of completed step **of RP** walking robot, generated by the MPS strategies module programmer, receives the values of force in motion space of **RP** walking robot, on each degree of freedom, from the **MCCDF** direct kinematics of force calculation module and the **2SCBMx** control signal from the **MUX** multiplexing digital control module, calculates in real time the force Jacobian matrix and transmits these values to the **MTMF** triangulation force matrix module,
**a MSF force summing module** receives position matrix values due to $\mathbf{X_F}$ force in movement space of **RP** walking robot, on each degree of freedom, from the **MCCDF** direct kinematics force calculation module and the $\mathbf{X_{DF}}$ reference force (desired) from the **MCMR** calculation module of stiffness matrix and calculates the position error due to force in movement space of **RP** walking robot, as a difference between the two input signals, on each robot motion axis, which is transmited to the **MMSF** force selection matrix module, which at its turn transmit these values to the **MSIF** force inverse substitution module only on the axis where force control will be provided, set by the **MPS** strategies programmer module,

**a MCCDF module** for direct kinematics calculating for position due to force receives the forces $\mathbf{f_i}$ from the robot joints, on each n axis in the robot motion, calculates in real-time position due to force in robot $\mathbf{X_F}$ movement space, on each degree of freedom, which is forwarded to a **MSF** force summing module,

**a MCMR calculation module of stiffness matrix** receives a force reference signal $\mathbf{f_{ref}}$ from the **GSM** gait generator module and generates in real-time a $\mathbf{X_{DF}}$ force reference signal (desired) determined by multiplying the physical stiffness of each segment corresponding to a leg joint and the desired residual force on each axis of freedom of the robot and sends it to a **MSF** force summing module,

**a CBTR** real time balance control **module** receives a signal of zero moment point **(PMZ)** from the walking robot **RP** and from the moments of $\mathbf{M_i}$ robot joints on each axis of robot motion and according to the control method from the present invention generates a **SCA** damping control signal, a control signal to compensate the zero moment point **SC-PMZ** and a **SCOA** orientation control signal at landing at the **MUX** multiplexing digital control module,

**a CSM gait control module** receives a signal from the **TINL** inertia transducer measuring angular position and speed of the platform, a signal of zero moment point **PMZ** and according to the control method from the present invention generates a **SCRA** for platform rotating / advance control signal and SCAB balance platform amplitude control signal to the **GSM** gait generator module,

**a CMP predictable movement control module** receives a signal from **TINL** inertia transducer and a signal from the TINC tilt transducer to measure tilt and leg acceleration in relation to the ground on which the robot walks and according to control method of the present invention generates a **SCSA** tilting control signal over the safety edge to a **MPS** position summing module and a **SCPA** landing position control signal for the **RP** walking robot to the **MMPJ** position matrix module,

**a GSM module for gait generation** receives a **SCRA** platform rotating / advance control signal and a SCAB platform balance amplitude control signal from a **SCM** control gait module and according to the control method of this invention, as well a portfolio of programs with predefined gait such as a tripod walking for a hexapod walking robot, the step by step walking generates a $f_{ref}$ force reference signal for a module that is calculating the **MCMR** stiffness matrix and a $\mathbf{X_D}$ reference position signal (desired) at a MUX multiplexing digital control module,

**a CRA repeating control module at landing** receives the force signals $f_i$ from the **RP** walking robot, on each axis of motion, and according to the control method of this invention it generates in the **MUX** multiplexing digital control module a blocking signal for the gait if the foot does not make contact with the ground at the end of single support phases, with reference position signal intrerruption provided by the walking generator and turning off the foot motion command, until it makes contact with the ground, due to inertia,

**a DPR control module when detecting a robot step** receives the force signals $f_i$ from the **RP** walking robot, on each axis of motion, and according to the control method of this invention, generates for the **MUX** multiplexing digital control module a signal when detecting touching the earth by the robot foot in double support phase with error signal multiplexing resulting from the control strategy of damping and the error signal resulting from the control strategy to compensate the zero moment point with the error signal resulting from the orientation control strategy at landing according to stages of the **MPS** strategy programmer module,

**a MUX** multiplexing **digital control module** receives three analog signals respectively a **SCA** damping control signal, a **SC-PMZ** control signal to compensate the zero moment point and a **SCOA** orientation control signal at landing from a **CBTR** real time balance control **module,** multiplexing of two signals received from a **CRA** repeating control module at landing and from a DPR control **module** when detecting a robot step, and according to MPS programming strategies generates three multiplexed control signals for balance **1SCBMx-3SCBMx.**

**The invention has the advantages** of achieving a dynamic control of walking robots, through quasi-simultaneous hybrid control, in real-time, for the motion trajectory of the end-effector's position and the robot leg joints, for the reaction forces and dynamic walking of walking robots, with increased movement stability on flat terrain, with obstacles or uneven ground, on constant walking speed or variable and variable load, with applications in the transport of nuclear materials, in agricultural activities of seeding, weeding, military applications in mines detecting, lunar experiments and general applications on uneven land hard to access.

**Further it is given an example** of realization the method and device according to the invention, in connection with Figure 1, which shows a basic diagram of the device and Figure 2 showing the stages of a full step of walking robot.

**Method and device according to the invention** consisting of 14 control strategies and a complex of modules which aim to generate, in real time, an error signal $\varepsilon_n$ on robot axis on each degree of freedom **of RP** walking robot for actuators control that take into account the position control strategies of position component, force component and dynamic control components to enhance stability of walking robots.

**A MPS strategies programmer module** receives one signal per robot degree of freedom for the error position signals of position components $\Delta\Theta_P$ from the **MSIP** inverse substitution of position module and error signal for the force component $\Delta\Theta_F$ from the **MSIF** force inverse substitution module, a **SCSA** tilting control signal over the safety edge from the **CMP** predictable movement control module, a **2SCBMx** multiplexed signal for balance control from the **MUX** multiplexing digital control module and transmit a **SEE** phase error signal to output and set the time to act for each control strategy reported in four stages of a full step for the walking robot as functions of control method shown in Figure 2.

**A MFSFC signals fusion module or fuzzy control** receive a **SEE** stage error signal from the **MUX** multiplexing digital control module and transmit an error signal $\varepsilon_n$ on robot axis for each degree of freedom of **RP** walking robot through its processing by signal fusion method or through the method of fuzzy control. An example of relations underlying hybrid force-position control through fuzzy control is presented below and is based on considerations of asigning speed for each axis for the deviation in the right direction in a heuristic way in which a human operator could perform the introduction. The task of the controller is to assign the measured deviation of **fuzzy** variables, such as "high positive" (PM), and to evaluate the decision rules of inference, so that in the end to be able to set the output variable, such as the variable of speed as a **fuzzy** parameter, which better follows the controlled parameter. Form of decision rule and fuzzy variables used in decision-making depends on the specific control problem. As input is considered the deviation in position for the compliant joints *e*, rate of deviation in position $\Delta e$ and contact force $\Delta f$. Values of irregularities detected through sensors are quantified in a number of points corresponding to the elements of the sorounding universe, and then the values are assigned as degrees of membership in some fuzzy subsets.

The relationship between inputs, such as the deviations measured, or outputs, such as speeds, and the degree of membership can be defined in accordance with task requirements and operator experience. Are empirically defined the membership functions for all the input and output elements. Fuzzy values were chosen as follows: NM - negative big, $N_M$ - average negative, Nm - negative small, ZO-zero, Pm-positive small, $P_M$ - average positive, PM - positive large. Analyzing the rule base it is observed that the force feedback loop is based on inference results of fuzzy control of component P. The two base rules are presented in Figures 3 and 4, where figure 3 represent the P base rules and figure 4 represent the PF base rule PF for fuzzy control. The rule base P is slightly modified from a typical linear rule base allowing the replacement of all zero values (ZO) except the center of rules. In this manner, the rule base P will be set on the value of ZO only when the system has stabilized, which means that both the error and the error terms correspond to the domain ZO. For a given set of inputs, eg. the deviation measured, assessment of **fuzzy** rules produce a set of **fuzzy** membership degrees for action control. To take a concrete action, must be chosen one of these values. In this application, there was selected the control value with the highest degree of membership. The rules are evaluated at regular intervals, in the same way as a conventional control system. Figures 5-8 present the set of membership functions for inputs and outputs. Figure 5-8 represents the set of membership functions for inputs and outputs, thereby figure 5 is the set of error fuzzy input, figure 6 the set of fuzzy inputs for speed error, figure 7 the fuzzy set of force values and figure 8 the fuzzy set of outputs.

**A MSIP inverse position substitution module** receives a signal for each degree of freedom of **RP** walking robot corresponding to the triangular position matrix from the **MTMP** position matrix triangulation module which at its turn receives signals corresponding to the Jacobian position matrix from the **MMPJ** Jacobian position matrix module, and which together perform the inverse Jacobian matrix calculation in real time, on all degrees of freedom of the **RP** walking robot.

**A MMPJ module of position matrix,** that according to the stage of the completed step of **RP** walking robot generated by the MPS strategies module programmer, receives the position values in the motion space of **RP** walking robot, per degree of freedom, from the **MCCDP** direct kinematic of position calculation module and **SCPA** landing position control signal from the **CMP** predictable moving control module, calculates in real time the Jacoban position matrix and transmit these values to the **MTMP** position matrix triangulation module.

To illustrate the calculation in real time for the Jacobian position matrix, the triangular matrix, the inverse substitution matrix and the Jacobian inverse matrix, we consider that the angles in robot coordinates ($\theta_c$) are transformed in Cartesian coordinates ($X_c$) through the Denavit-Hartenberg transformation with the transformation matrix:

$$^{j}P = {}^{j}A_{j+1} \cdot {}^{j+1}P \qquad (1)$$

where it was noted: $\theta_j$ - the angle in axial coordinates, $d_j$ - the residual distance (offset), $a_j$ - the axial lenght, $\alpha_j$ - the rotation, $^{j}P$ , $^{j+1}P$ represents a point in robot coordinates space of j axis respectively j+1 axis. The position error in Cartesian coordinates is obtained as a diference between the reference position (desired) and the current one. The difficulty in robot trajectory control is that the generated positions $X_C$ and the position error $\delta X$ are given as Cartesian coordinates while the continuous measurement of robot position $\theta_{1,\ 2,....n}$ and the actuators' command angular error $\delta\theta_{1,\ 2,...,\ n}$ must be given in robot coordinates. The relationship between the position and the orientation of robot's end-effector generated in Cartesian coordinates and the angles of axis in robot coordinates $\theta_1$, $\theta_{2, \ldots}$ $\theta_n$ is:

$$x_i = f_i \cdot (\theta), \qquad (2)$$

where θ is the vector which represents the angular position on all degrees of freedom expressed in robot coordinates. Through differentiation is obtained for n=6:

$$\delta^6 X_6 = J(\theta) \cdot \delta\theta_{1,2,\ldots,6} \qquad (3)$$

where $\delta^6 X_6$ represents the implementation of the differentiation operator in linear and angular changes of current position $X_C$ of the end-effector element given in Cartesian coordinates $\delta\theta_{1,2,\ldots,n}$, represents the usage of the derivation operator for the angular set of values given in robot coordinates. $J(\theta)$ is the Jacobian matrix in which the $a_{ij}$ elements are according to the relationship:

$$a_{ij} = \frac{\delta \cdot f_{i-1}}{\delta \cdot \theta_{j-1}} \qquad (4)$$

where ij correspond to vector x respectively θ. The inverse Jacobian matrix transforms the actual position in Cartesian coordinates $\delta^6 X_6$ respectively δX in angular error corresponding to the robot coordinates δθ according to the relationship:

$$\delta\theta_{1,2,\ldots,n} = J^{-1} \cdot (\theta) \cdot \delta^6 X_6 \qquad (5).$$

Jacobian calculation is a consecutive multiplication of the matrix Xc corresponding to the Denevit-Hartenberg transformate for the manipulator. The Gauss eliminations method provides an efficient implementation to calculate the inverse matrix. The method consists in reducing the matrix J(θ) to an upper triangular form and the calculation of error δθ in robot coordinates using inverse substitution. The δθ angular error vector is used as a direct control signal to drive the robot actuators.

**A MSP position summing module** receives the position matrix values in $\mathbf{X_p}$ robot motion space, on each degree of freedom, from the **MCCDP** direct kinematic of position calculation module and the $\mathbf{X_D}$ reference position (desired) corresponding to the **1SCBMx** signal from the **MUX** multiplexing digital control module and calculates the position error in the **RP** walking robot motion space as the difference between the two input signals, on each robot motion axis, which is transmited to the **MMSP** position selection matrix module, which at its turn transmit these values to the **MSIP** inverse position replacement module only on the axis to provide position control set by the strategies programmer module **MPS.**

**A MCCDP module for calculating the direct kinematics of position** receives the position on $\Theta_{Pni}$ robot axis from the incremental position transducers, on each axis n of robot's motion, calculates in real-time the position in $\mathbf{X_P}$ robot space, on each degree of freedom, which is transmited to a **MSP** position summing module.

**A MSIF force inverse substitution module** receives a signal on each degree of freedom of **RP** walking robot corresponding to the force triangular matrix from the **MTMF** force trangulation matrix module, which at its turn receives signals corresponding to force Jacobian matrix from the **MMFJ** force Jacobian matrix module, and performes together with the inverse Jacobian matrix calculation, in real time, on all degrees of freedom of **RP** walking robot.

**A MMFJ module for the force matrix,** which according to the stage of the complete step of **RP** walking robot generated by the MPS strategies programmer module, receives the values coresponding to the force in motion space of **RP** walking robot, on each degree of freedom, from the **MCCDF** direct kinematics calculation module of force and the **2SCBMx** control signal from the **MUX** multiplexing digital control module, calculate in real time the force Jacobian matrix and transmit these values to the **MTMF** triangulation force matrix module.

**A MSF force summing module** receives the position matrix values due to the $\mathbf{X_F}$ force in **RP** walking robots' motion space, on each degree of freedom, from the **MCCDF** direct force kinematics calculating module and the $\mathbf{X_{DF}}$ reference force (desired) from the calculation of **MCMR** stiffness matrix and calculates the position error due to force in **RP** walking robot motion space as a difference between the two input signals, on each robot motion axis, which is transmited to the **MMSF** force selection matrix module, which at its turn transmit these values to **MSIF** force inverse substitution module only on the axis on which will ensure force control established by the **MPS** strategies programmer module.

**A MCCDF module of calculating the direct kinematics of position due to forces** receives the $\mathbf{f_i}$ forces from the robot joints, on each n axis of robot motion, calculates in real-time the position due to force in $\mathbf{X_F}$ robot movement space, on each degree of freedom, which is retransmited to a **MSF** force summing module.

**A MCMR calculation module of stiffness matrix** receives a $\mathbf{f_{ref}}$ force reference signal from the **GSM** gait generator module and generates in real-time a $\mathbf{X_{DF}}$ force reference signal (desired) determined as the multiplication between the physical stiffness of each leg segment corresponding to the leg joint and the desired residual force on each axis of freedom of the robot and send it to a **MSF** force summing module.

An example of modeling for hybrid force-position control is given below. Thus, a hybrid position-force control system usually achieves a simultaneous control of position and force. To determine the relationship of control in this situation, we devide $\Delta X_P$, the deviation measured by the control system in Cartesian coordinates in two sets: $\Delta X^F$ - corresponding to the component controlled in force and $\Delta X^P$ - corresponding to position control with actioning on axis as the selection matrix $S_t$ and $S_x$. If we consider only the position control on the directions set by the selection matrix $S_x$ can be determined both the desired differential movements of the final implementation element corresponding to position control in the relationship:

$$\Delta X_P = \bar{K}_P \, \Delta X^P, \qquad (6)$$

where $\mathbf{K_P}$ is the gain matrix, and the desired movement angles on the position controlled axis:

$$\Delta\theta_P = J^{-1}(\theta) * \Delta X_P \qquad (7).$$

Further, taking into account the force control on the other remaining directions, the relationship between the angular motion desired of the end-effector and force error $\Delta X_F$ is given by:

$$\Delta\theta_F = J^{-1}(\theta) * \Delta X_F, \qquad (8)$$

where the position error due to force $\Delta X_F$ is the difference in motion between $\Delta X^F$ - the measured current position deviation by the control system that generates the deviation of position for the controlled axis in force $\Delta X_D$-the deviation in the desired position due to residual force. Noting with $\mathbf{F_D}$ the desired residual force and the physical stiffness with $\mathbf{K_w}$ one gets the relationship:

$$\Delta X_D = K_W^{-1} * F_D \qquad (9).$$

Thus, $\Delta\mathbf{X_F}$ can be obtained from:

$$\Delta X_F = K_F (\Delta X^F - \Delta X_D) \; (10)$$

where $\mathbf{K_F}$ is the dimensional relation of the stiffness matrix. In the end, motion variation on robot axis in relation with motion variation on execution element will result, considering the relation:

$$\Delta\theta = J^{-1}(\theta) \, \Delta X_F + J^{-1}(\theta) \, \Delta X_P \qquad (11)$$

**A CBTR real time balance control module** receives a signal of the zero moment point **(PMZ)** from the RP walking robot and from $M_i$ moments of robot joints on each robot motion axis and according to the control method from this invention it generates a **SCA** damping control signal, a **SC-PMZ** compensation control signal of the zero moment point and a **SCOA** orientation control signal at landing to the **MUX** multiplexing digital control module.

**An example of damping control strategy** for walking robots stepping in the phase of single support, is presented in figure 9 which represents the walking robot movement modelation in the damping control strategy. Through robot motion modeling according to the equation of inverse simple pendulum with a joint in the single support, which opposes to damping forces of leg joints it leads to the following relations:

$$T = mgl\theta - ml^2\ddot{\theta} = K(\theta - u) \qquad (12)$$

Respectively:

$$u_c = u - k_d\hat{\dot{\theta}} \qquad (13),$$

where $\alpha$=*K*/*ml*2-. *g*/*l*, $\beta$= *K*/*ml*2, $k_d$ is the damping control amplification, $u_c$ is the angle of compensated joint, *l* is the distance from ground to the centre of mass, *m* is the equivalent mass, *u* is the reference joint angle, $\theta$ is the actual value of joint angle due to compliance, *K* is leg stiffness, *T* is the measured torque and g is the acceleration due to gravitation. Through modeling it is obtained the control diagram from fig.10, which represents the control digram of balance damping.

An example of compensation control strategy of zero moment point, in single support phase, due to the forth and backward movement of the platform according to zero moment point dynamics, consisting in mathematical modeling for moving a zero moment point compensator through the equation of inverse simple pendulum, leads to the relation:

$$Y_{PMZ} = Y_{platforma} - \frac{l}{g}\ddot{Y}_{platforma} \qquad (14)$$

where $Y_{platform}$ is the lateral displacement of the platform, *l* is the distance from the ground to the centre of mass, *g* is the acceleration due to gravitation and $Y_{PMZ}$ is the lateral PMZ

The block diagram for PMZ control in reaction loop is presented in figure 11 where $PMZ_{ref}$ is the PMZ reference, *C(s)* is the compensator and *G(s)* is the transfer function, $p_{latform}$ and $c_{omp}$ represents the default displacement and the platform compensation displacement on the transverse plane.

The guiding control strategy on landing is obtained by deducting the reference angle of leg joint and the compensated reference angle of leg joint calculated by integrating the measured torque on the whole stepping period with a time constant given by the damping coefficient on landing and the stepping stiffness, according to the relation:

$$u_c = u + \frac{T(s)}{C_L s + K_L} \qquad (15)$$

where *T* is the measured torque, $C_L$ is the damping coefficient, $K_L$ is the stiffness, *u* is the reference angle of leg joint and $u_c$ is the compensated reference angle of leg joint.

**A CSM gait control module** receives a signal from the **TINL** inertia transducer which measures the angular position and platform speed, a signal **of PMZ** zero moment point and according to the control method from this invention it generates a **SCRA** platform rotating / advance control signal and a **SCAB** platform amplitude balance control signal to the **GSM** gait generator module.

The rotation/advance control strategy allows the central position of the platform to move along the opposite direction of the slope on the transversal plane, so that the dangling movements are well balanced, and platform position vectors to be obtained through a integration iterative relation of the angular error vector of the platform between the single support phases, amplified with a incremental coefficient experimentally determined.

The platform balance amplitude control strategy for moving the zero moment point, adjusted through zero moment point measurement during each walking cycle, is achieved through lateral balance amplitude modeling of the platform by a inverse pendulum and obtained through a compensation algorithm of the legs position which are in contact with the ground so that actual zero moment point amplitude (measured) to converge towards the reference medium zero moment point. The walking robot motion modeling can be realized in this situation using the relation:

$$Y_{PMZ} = Y_{platforma} - \frac{l}{g}\ddot{Y}_{pplatforma} \qquad (16)$$

having the same notation as in the relation (14), with the difference that concerns the lateral displacement of walking robot platform.

**A CMP predictable movement control module** receives a signal from a **TINL** inertia transducer and a signal from TINC tilting transducer which measures the tilting and acceleration of the foot against the surface which robot walks on and according to the control method from this invention it generates a **SCSA** tilting control signal over the safety edge to a **MPS** position summing module and a **SCPA** landing position control signal of the **RP** walking robot to a **MMPJ** position matrix module

The landing position control strategy, which consist in generating some probabilistic movements of the robot by processing previous movements in order to avoid abnormal movements, has a role in the stepping towards the falling direction, through torsion movement of the platform, obtained by applying a movement law experimentally determined over the normal movement around z axis of robot foot, where the foot position vector in the landing phase is determined as a iterative relation by adding the landing position of a error vector to a prescribed vector, achieved through multiplying by an amplification factor between the average angular speeds and stable angular speeds of the advance and torsion movement.

Tilting control strategy over the safety edge of the robot, which consists in anticipating robot movements based on statistical experimental informations, in compliance with stability edges, preventing abnormal conditions and processing additional movements in order to avoid this instabilities which lead to robot turnover when moving on uneven ground or external forces and allows real-time determination of the tilting edges overreaching inwards, and outwards, by iterative integration of the rotation angle in torsion motion of the platform on a $\tau$ period from beginning of each phase, and if overreaching of the tilting edges occurs, the rotation angle of foot joint is compensated through a predefined algorithm according to the rotation angle value in torsion movement of the platform. Tilting control law for right foot prescribed rotation angle of foot joint is determined with the following relations:

If: $\int_{Faza1,s}^{Faza1,\tau} \theta_{\gamma}^{tors} dt > V_{inclinare,\, ext}$, when tilting outward and $\int_{Faza1,s}^{Faza1,\tau} \theta_{\gamma}^{tors} dt < V_{inclinare,\, \mathrm{int}}$, when tilting inward, then:

$$\theta_{m,r}^{R-unghi}(t) = \theta_{r}^{R-unghi}(t) + A_R(M_R)\sin\left(2\pi\frac{t_c}{\tau'}\right)(grade)\left(0 \le t_c \le \frac{\tau'}{2}\right), \qquad (17)$$

where: $M_R = \int_{Faza1,s}^{Faza1,\tau} \theta_{\gamma}^{torso} dt\,(grade)$ $V_{inclinare,ext} = 20$, $V_{inclinare,int} = 0$, $V_{inclinare,ext}$ and $V_{inclinare,int}$ are the values where leaping of the inward and outward values appear, $\tau'$ is the tilting control period, $\theta_{\gamma}^{torso}$ is the rotation angle in torsion movement, $A_R$ is the sinusoidal compensation amplitude and $\theta_{m,\gamma}^{R-unghi}$ is the prescribed rotation angle of foot joint.

**A GSM gait generator module** receive a **SCRA** platform rotation/advance control signal and a **SCAB** a control signal of platform balance amplitude from a **CSM** gait control module and according to the control method from this invention, together with a default gait program portfolio such as tripod walk for hexapod walking robots, the step by step walking, generates a $\mathbf{f_{ref}}$ force reference signal to a **MCMR** calculation module of stiffness matrix and a $\mathbf{X_D}$ reference position signal to a **MUX** multiplexing digital control module.

**A CRA repeating control module** at landing receives a $\mathbf{f_i}$ force signal from the **RP** walking robot, on each movements axis, and according to the control method from this invention generates a gait blocking signal to the **MUX** multiplexing digital control module if the foot is not in contact with the ground at the end of single support phase, and interrupting the position reference signal provided by the gait generator and stopping the foot movement commands until it is in contact with the ground, due to inertia.

**An DPR control module** when detecting a robot step receives $\mathbf{f_i}$ force signals from the **RP** walking robot, on each movement axis, and according to the control method from this invention it generates to the **MUX multiplexing digital control module,** a signal when detecting touching of the ground by the robot foot in double support phase together with **MUX** multiplexing the error signal resulted from damping control strategy and error signal resulted from the compensating control strategy of the zero moment point together with the error signal resulted from the landing orientation control strategy according to the phases from **MPS** strategy programmer module.

**A MUX multiplexing digital control module** receives three analogical signals and also a **SCA** damping control signal, a **SC-PMZ** compensation control signal of the zero moment point and a **SCOA** orientation control signal at landing from a **CBTR** real time balance control module, multiplexing two signals received from a **CRA** repeating control module at landing and from a **DPR** control module when detecting a robot moving step, and according to **MPS** strategy programmer it generates three **1SCBMx-3SCBMx** multiplexed balance control signals

## Claims

**1.** The method for dynamic control of the walking robot, **characterized in that** real-time hybrid control of the moving trajectory position of walking robot leg ends and joints, comprises in 14 sequences which calculates:

(i) error due to position component ($\Delta\Theta_P$) on robot freedom axis related with the walking robot leg joints **(RP),** which is obtained by multiplying the position error matrix **($X_P$)** in robot movement space, due to the difference between the desired trajectory and real trajectory, determined by measuring the position signals from walking robot leg joints, **(RP)** applied to the matrix resulted from direct kinematics of robot mechanical structure, having the inverse kinematic matrix values of robot mechanical structure, values obtained in a process simultaneous with the process for determination of the position error matrix in robot space, through Jacobian matrix processing with real values received from robot leg joints, triangulation of the matrix determined in this manner and achieving the inverse substitution.
(ii) error due to force component ($\Delta\Theta_F$) on robot freedom axis related with robot leg joints **(RP)** which is obtained by the multiply between position error matrix in robot movement space due to force, determined as a movement difference between current position deviation, measured by the command system, which generates position deviation for the axis controlled in force and position deviation due to desired residual force, determined as a multiply between the stiffness of each leg segment, in relation with desired joint and residual force on each robot freedom axis, with the inverse kinematic matrix values of robot mechanical structure, matrix values obtained in a process simultaneous with the process for determination of the position error matrix in robot space due to force, through Jacobian matrix processing with real values received from robot leg joints, triangulation of the matrix determined in this manner and achieving the inverse substitution,

**where will be added** errors determined by applying control strategies of stable dynamic walk for walking robot **(RP)** as follows:

(iii) error obtained from damping control strategy **(SCA)** when walking robot **(RP)** is moving in the single support stage, through robot movement modeling together with inversed single pendulum equation, with a joint in single support stage, which opposes damping forces of leg joint.
(iv) error obtained from compensation control strategy of zero moment point **(SC-PMZ),** in a single phase, phase of single support, due to forward and backward platform movement according to the zero moment, which consists in mathematical modeling of an compensator movement of zero moment point by the equation of a inverted simple pendulum
(v) error resulted from the orientation control strategy at landing **(SCOA),** obtained through the difference between the reference angle of leg joint and compensated reference angle of leg joint, calculated through integrating the measured torque by a time constant given by the damping coefficient at landing and the stepping stiffness on entire period of stepping
(vi) error resulted from the platform balance amplitude control strategy **(SCAB)** in order to move the zero moment point, rectified through zero moment point measurement during each walking cycle, achieved by lateral balance amplitude measurement of the platform through an invert pendulum and obtained through an compensating algorithm of leg position which are in contact with the ground, so that the actual zero moment point amplitude could converge towards the reference average zero moment point.
(vii) error from platform rotation/advance control strategy **(SCRA)** which allows the central position of the platform to move along the opposite direction of the slope on the transversal plane, so that the dangling movements to be well balanced, and platform position vectors to be obtained through a integration iterative relation of the angular errors vector of the platform between the single support phases, amplified with a incremental coefficient experimentally determined.
(viii) error from landing position control strategy **(SCPA),** consists in generating some probabilistic movements of the walking robot **(RP)** through processing previous movements designed to avoid abnormal movements, aims that the stepping to be towards the falling position, through a torsion movement of the platform, achieved by overlapping a motion law experimentally determined, over the normal movement around the z axis of robot leg, where the leg position vector, in the landing phase, it is determined as a iterative relation, by adding the landing position of error vector to the prescribed vector, obtained by multiplying with an amplification parameter between average angular speeds and stable angular speeds of advance and torsion movement.

(ix) error from the control strategy of tilting over the robot safety edges **(SCSA),** which consists in anticipating walking robot movement **(RP),** based on statistic experimental information, with respect to the stability edges, preventing abnormal conditions and processing some additional movements, in order to avoid this instabilities which lead to robot turnover when moving on uneven ground or external forces and allows real-time determination of the tilting edges inwards overreaching, and outwards, by iterative integration of the rotation angle in torsion motion of the platform on a $\tau$ period from beginning of each phase, and if overreaching of the tilting edges occurs, the rotation angle of foot joint is compensated through a predefined algorithm according to the rotation angle value in torsion movement of the platform.

**where some error signals** are digitaly controlled together with their multiplexing, taking into account two control strategies such:

(x) the control when detecting a robot moving step **(DPR),** where takes place the multiplexing of error signal resulted from damping control strategy and error signal resulted from the compensating control strategy of the zero moment point together with the error signal resulted from the landing orientation control strategy according to the phases from strategy programmer module, when detecting the touching of the ground by the walking robot leg **(RP)** in double support phase.

(xi) a repeating control module at landing(**CRA)** which avoids instabilities of walking robot **(RP)** movements at landing, by generating a gait blocking signal, if the foot is not in contact with the ground at the end of single support phase, together with interrupting the position reference signal provided by the gait generator and stopping the foot movement commands until it is in contact with the ground, due to inertia,

**where two programs are added:**

(xii) a strategy programmer **(MPS)** of the moments of driving each control strategies related to 4 stages of a complete walking robot step **(RP),** having the functions: in first stage is achieved damping control, zero moment point compensation control and tilting control over the safety edges, in the second stage of single support takes places damping control, zero moment point compensation control and landing position control, in second phase of double support takes place landing orientation control, regular adjustment control of platform lateral balance amplitude, platform rotation/advance control and landing position control, the third stage correspond to stage 1 and stage 4 which correspond to stage 2, together with continuous maintaining of error signals due to position component and force component

(xiii) a gait generator program **(GSM)** of the walking robot **(RP)** generates a force reference signal($\mathbf{f}_{ref}$) and a $\mathbf{X_D}$ reference position signal according to the platform rotation/advance control strategy and a platform balance amplitude control signal together with a program portfolio with default gait such as tripod walk of a hexapod walking robot, step by step walking

(xiv) thus in the end, through processing error signals using resulted signals merging from strategy programmer error signal is obtained for actuators command of walking robot structure **(RP)** on each movement axis.

**2.** According to claim 1, the method **defined by that,** in the processing stage of resulted error signals from strategy programmer, fuzzy control for actuators command of walking robot **(RP)** structure is applied on each movement axis.

**3.** Device, for putting into practice the method from claim 1, which allows dynamic control of walking robot, **defined** in **that is made of:**

(i) an MPS strategy programming module receives a signal on each robot degree of freedom for error signals of position components $\Delta\Theta_P$ from **MSIP** position inverse substitution module and error signals of $\Delta\Theta_\mathbf{F}$ force component from **MSIF** force inverse substitution module, a **SCSA** tilting control signal over the safety edge from **CMP** predictable movement control module, a **2SCBMx** multiplexed balance control signal from **MUX** multiplexing digital control module and transmits an **SEE** stage error signal to the output and establishes driving moments of each control strategy related to 4 stages of each walking robot complete step **(RP)** according to functions from the control method of this invention,

(ii) an **MFSFC** signal merging **module** or fuzzy control receives an **SEE** phase error signal from **MUX** multiplexing digital control module and transmits an error signal on $\varepsilon_n$ robot axis on each degree of freedom of **RP** walking robots by processing it through signal merging method or fuzzy control method,

(iii) an **MSIP** position inverse substitution module receives a signal on each degree of freedom of **RP** walking robot according to the position triangulation matrix from **MTMP** position matrix triangulation module, which also receives signals related to jacobian position matrix from MMPJ jacobian position matrix module, and which together perform, jacobian inverse matrix calculation in real time, on all degree of freedom **of RP** walking robot (iv)an **MMPJ** position matrix **module,** which receives the values related to the movement space of **RP** walking robot, depending on the stage of the **RP** walking robot complete step, generated by the **MPS** strategies programmer module, on each degree of freedom, from **MCCDP** direct kinematic of position calculation module and the **SCPA** landing position control signal from **CMP** predictable movement control module, calculates the Jacobian position matrix in real time and transmits these values to the **MTMP** position matrix triangulation module,

(v) an **MSP** position summing **module** receives the position matrix values in $X_P$ robot movement space, on each degree of freedom, from **MCCDP** direct kinematic of position calculation module and $X_D$ reference position related to **1SCBMx** signal from **MUX** multiplexing digital control module and calculates the position error in movement space of RP walking robot as a difference between the two input signals, on each robot movement axis, which transmits it to the **MMSP** position selection matrix module, which at its turn transmits these values to the MSIP position selection matrix module only on the axis on which control in position will be provided, set by the **MPS** strategy programmer module,

(vi) an **MCCDP** direct kinematic of position calculation module receives position on $\Theta_{Pni}$ robot axis from position incremental transducer, on each n axis of robot movement, calculates $X_P$ position in robot movement space in real time, on each degree of freedom, which will be transmitted to a **MSP** position summing module,

(vii) an **MSIF** force inverse substitution **module** receives a signal on each degree of freedom of **RP** walking robot related to force triangulation matrix from **MTMF** force triangulation matrix module, which at its turn receives signals related to the jacobian force matrix from jacobian force matrix module **MMFJ,** and which together perform jacobian inverse matrix calculation in real time, on each degree of freedom **of RP** walking robot,

(viii) an **MMFJ** force matrix **module,** which receives the values related to the movement space of RP walking robot, depending on the stage of the **RP** walking robot complete step generated by the **MPS** strategy programmer module, on each degree of freedom, from **MCCDF** force direct kinematic calculation module and the **2SCBMx** control signal from **MUX** multiplexation digital control module, calculates the Jacobian force matrix in real time and transmits these values to the **MTMF** triangulation module of force matrix,

(ix) an **MSF** force summing **module** receives position matrix values due to $X_F$ force in movement space of **RP** walking robot, on each degree of freedom, from **MCCDF** force direct kinematics calculation module and $X_{DF}$ reference force, from **MCMR** calculation module of stiffness matrix and calculates the position error due to force in movement space of **RP** walking robot as a difference between the two input signals, on each robot movement axis, which transmits it to the **MMSF** force selection matrix module, and at its turn transmits these values to the **MSIF** force inverse substitution module only on the axis on which control in force will be provided, set by the **MPS** strategy programmer module,

(x) an calculation **module** of position direct kinematics due to **MCCDF** receives $f_i$ forces from robot joint, on each n axis of robot movement, calculates position in real time, due to force in $X_F$ in robot movement space, on each degree of freedom, which transmits it to a **MSF** force summing module,

(xi) an calculation **module** of **MCMR** stiffness matrix receives a $f_{ref}$ force reference signal from **GSM** gait generator and generates, in real time, a $X_{DF}$ reference (desired) force signal as a multiply between stiffness of each leg segment related to the joint and desired residual force on each freedom axis of robot which transmits it to a **MSF** force summing module,

(xii) an **CBTR** real time balance control **module** receives a signal of zero moment point **(PMZ)** from **RP** walking robot and $M_i$ robot joint moments on each movement axis of robot and according to control method from this invention it generates a **SCA** damping control signal, a **SC-PMZ** compensation control signal of zero moment point and a **SCOA** orientation control signal at landing to the **MUX** multiplexing digital control module,

(xii) an **CSM** gait control **module** receives a signal from **TINL** inertial transducer which measures angular position and platform speed, a **PMZ** zero moment point signal and according to the control methods of this invention it generates a **SCRA** platform rotation/advance control signal and a **SCAB** platform balance amplitude control signal to the **GSM** gait generator module,

(xiv) an **CMP** predictable movement control **module** receives a signal from **TINL** inertial transducer and a signal from **TINC** tilting transducer which measures the tilting and leg acceleration in relation with the ground where robot is walking and according to control method from this invention generates a **SCSA** tilting control signal over the safety edge to a **MPS** position summing module and a **SCPA** landing position control signal of **RP** walking robot to a **MMPJ** position matrix module,

(xv) an **GSM** gait generator **module** receives a **SCRA** platform rotation/advance control signal and a **SCAB** platform balance amplitude control signal from a **CSM** gait control module and according to the control methods from this invention, and along with a portfolio of default gait program such as tripod walk at a hexapod walking robot, the step by step walking generates a signal of $\mathbf{f_{ref}}$ force reference signal to **MCMR** calculation module of stiffness matrix and a $\mathbf{X_D}$ reference (desired) position signal to a **MUX** multiplexing digital control module,

(xvi) a **CRA** repeating control **module** at landing receives a $\mathbf{f_i}$ force signal from **RP** walking robot, on each movement axis, and according to control methods from this invention it generates a gait blocking signal to the **MUX** multiplexing digital control module, if the foot is not in contact with the ground at the end of the single support stage, together with cutting off the position reference signal delivered by the gait generator and stopping leg movement command until it's in contact with the ground, due to inertia,

(xvii) an **DPR** control **module** when detecting a robot step receives $\mathbf{f_i}$ force signal from **RP** walking robot, on each movement axis, and according to the control methods from this invention it generates a signal when detecting the touching of ground by the robot leg in double phase to the **MUX** multiplexing digital control module, together with the multiplexing of error signal obtained from damping control strategy and error signal obtained from compensation control strategy of zero moment point, together with the error signal obtained from landing orientation control strategy according to the stages from **MPS** strategy programmer module,

(xviii) an **MUX** multiplexing digital control **module** receives three analogical signals and also a **SCA** damping control signal, a **SC-PMZ** compensation control signal of zero moment point and a **SCOA** orientation control signal at landing, from **CBTR** real time balance control module, multiplexation of two signals received from CRA repeating control module at landing and from a **DPR** control module when detecting a robot step, and according to **MPS** strategy programmer, it generates three **1SCBMx- 3SCBMx** multiplexed balance control signals.

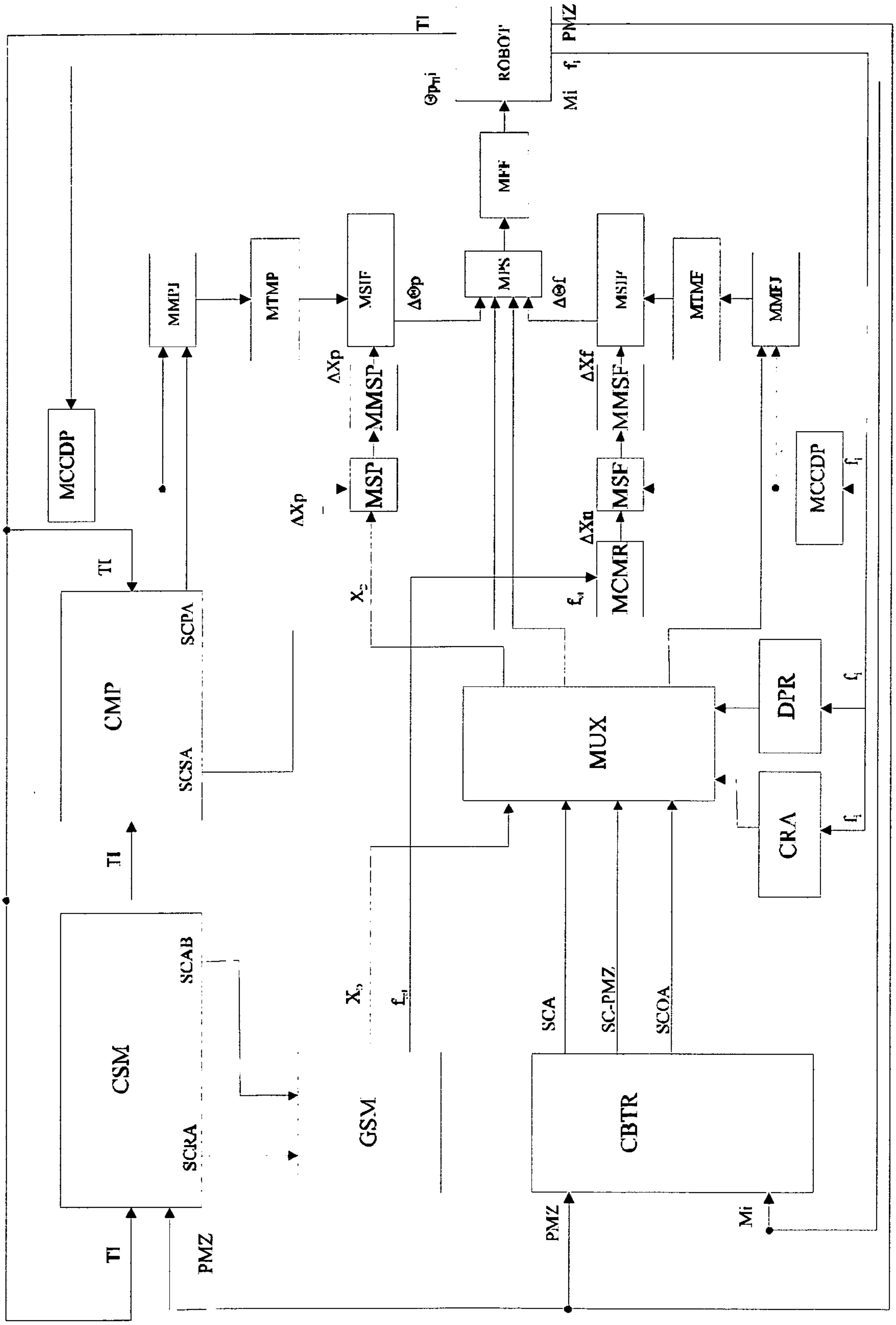
ROBOT
TI
PMZ
Mi
MFF
MPS
MSIF
MTMP
MMPJ
MTMF
MMFJ
MCCDP
MSP
MMSP
MSF
MMSF
MCMR
ΔXp
ΔXf
ΔXn
CMP
SCPA
SCSA
CSM
SCAB
SCRA
GSM
MUX
DPR
CRA
CBTR
SCA
SC-PMZ
SCOA

Figure 1

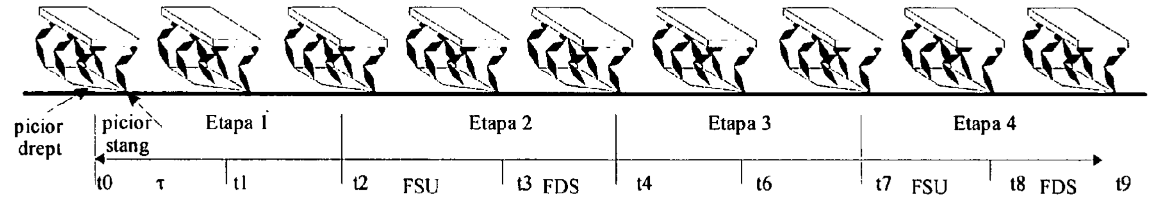


Figure 2

**Δ e** (columns) / **e** (rows)

| e \ Δe | NM | $N_M$ | Nm | ZO | Pm | $P_M$ | PM |
|---|---|---|---|---|---|---|---|
| NM | NM | NM | NM | NM | $N_M$ | Nm | Nm |
| $N_M$ | NM | NM | NM | $N_M$ | Nm | Pm | Pm |
| Nm | NM | $N_M$ | $N_M$ | Nm | Nm | Pm | $P_M$ |
| ZO | NM | $N_M$ | Nm | ZO | Pm | $P_M$ | PM |
| Pm | $N_M$ | Nm | Pm | Pm | $P_M$ | PM | PM |
| $P_M$ | Nm | Nm | Pm | $P_M$ | PM | PM | PM |
| PM | Pm | Pm | $P_M$ | PM | PM | PM | PM |

Figure 3

***Valoarea fuzzy P*** / **Δf** (rows)

| Δf | NM | $N_M$ | Nm | ZO | Pm | $P_M$ | PM |
|---|---|---|---|---|---|---|---|
| NM | NM | $N_M$ | Nm | NM | Pm | $P_M$ | PM |
| $N_M$ | NM | $N_M$ | Nm | $N_M$ | Pm | $P_M$ | PM |
| Nm | NM | $N_M$ | Nm | Nm | Pm | $P_M$ | PM |
| ZO | NM | $N_M$ | Nm | ZO | Pm | $P_M$ | PM |
| Pm | NM | $N_M$ | Nm | Pm | Pm | $P_M$ | PM |
| $P_M$ | NM | $N_M$ | Nm | $P_M$ | Pm | $P_M$ | PM |
| PM | NM | $N_M$ | Nm | PM | Pm | $P_M$ | PM |

Figure 4

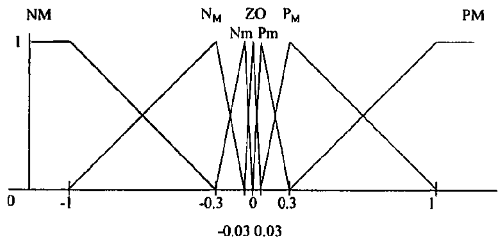


Figure 5

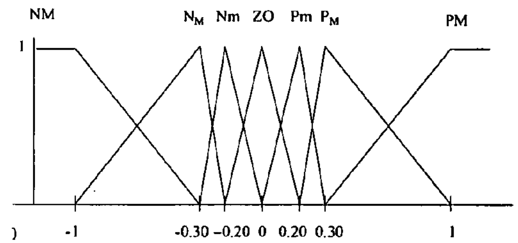


Figure 6

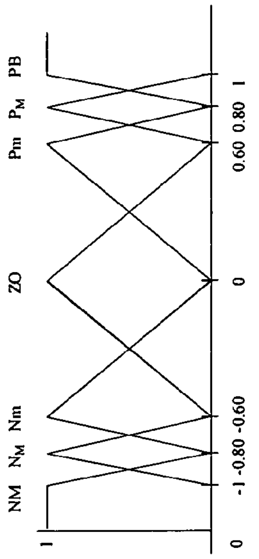


Figure 8

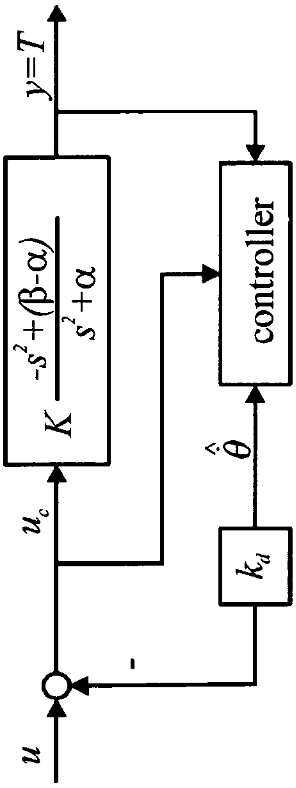


Figure 10

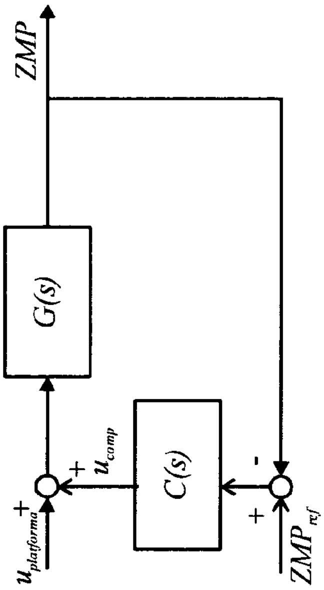


Figure 11

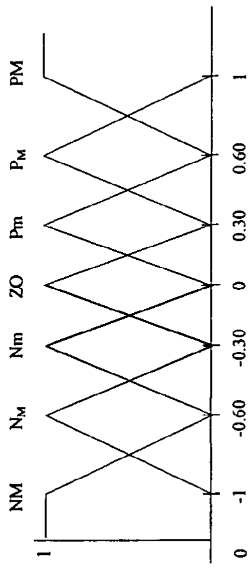


Figure 7

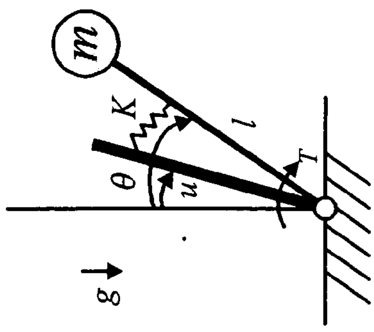


Figure 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **KAJITA.** *Proceedings of Conference on Robotics and Automation,* 2003, 1620-1626
- **KAGAMI.** *Proceedings of IEEE International Conference on Intelligent Robots and Systems,* 2002, 2557-2562